# EUROPEAN PATENT APPLICATION

(11) **EP 3 306 839 A1**
(43) Date of publication of application: **11.04.2018**
(21) Application number: 16306320.9
(22) Date of filing: 06.10.2016
(51) Int. Cl.: H04J 3/16, H04J 3/06

(54) **FLEXIBLE ETHERNET CLIENT MAPPING PROCEDURE**

(71) Applicant: ALCATEL LUCENT, 92100 Boulogne-Billancourt (FR)
(72) Inventor: MEYER, Gerhard, 70435 Stuttgart (DE)
(74) Representative: MERH-IP Matias Erny Reichl Hoffmann Patentanwälte PartG mbB

(57) **Abstract**

This application relates to a method for converting a server signal to an optical transport signal to be transmitted over an Optical Transport Network. The server signal carries one or more client signals and the optical transport signal has a frame structure referred to as Optical Transport Units, each of which comprises at least one Optical Data Unit. The method comprises receiving the server signal at an edge network node of the Optical Transport Network and demapping the one or more client signals from the server signal. The method further comprises extracting a server signal clock from the server signal and generating one or more client signal clocks for the one or more client signals based on the server signal clock. Moreover, the method comprises mapping synchronously the one or more client signals to the Optical Data Units of the optical transport signal using the one or more client signal clocks and transmitting the optical transport signal on the Optical Transport Network. According to the disclosure, each of the client signals comprises a time-division-multiplex (TDM) signal with a corresponding transmission rate, and each of the client signal clocks associated with one of the client signals.

## Description

### Technical Field

This application relates to the field of telecommunications, and more particularly, to a method and related apparatus for transmitting client data in an optical transport network.

### Background

A new flexible Ethernet (FlexE) concept has been discussed at Optical Internet Forum (OIF) and a first baseline was created in 2015, which provides a generic mechanism for supporting a variety of Ethernet medium access control (MAC) rates. In general, FlexE Client signals are mapped into FlexE Server signals and details of the terminology, mapping procedures, etc. used for FlexE architecture have been described in the OIF standard.

In detail, FlexE awareness in optical transport equipment requires FlexE Server termination and mapping of the FlexE Clients into Optical Data Unit (e.g. ODUk/ODUflex) containers. One solution has been proposed by ITU-T to introduce a new mapping procedure called Idle Mapping Procedure (IMP). According to the standard ITU-T G.709, the mapping of FlexE Client into a FlexE Server is accomplished by 64B/66B idle insertion and deletion to adapt an Ethernet Client signal into the FlexE Server signal. During this mapping, the Ethernet Client rate will be reduced by 0.011%, which can be compensated by this idle/deletion mechanism. The FlexE Client can accommodate Ethernet Client rate variations of +/- 100 ppm which is within the rate tolerance according to standard IEEE 802.3.

Nevertheless, this IMP procedure needs to be done twice, i.e. one instance is carried out within the FlexE Server termination and the other is accomplished during the mapping into the ODUflex/ODUk. In particular, every idle insertion and deletion process requires buffer to store the packets, which leads to more latency. This mapping procedure therefore requires very high complexity in the design, for example, by using 64B/66B idle insertion/deletion, packet awareness, etc.

Accordingly, there is a need to improve the mapping/demapping procedure for FlexE Clients into ODUflex/ODUk to realize more efficient transmission of FlexE Clients over the OTN.

### Summary

In view of these needs, the present document proposes a signal conversion method for implementing server signal termination for transmission in an optical network, e.g. an optical transport network (OTN), and in particular, for providing an efficient way to convert a server signal to an optical transport signal which can be transmitted over an Optical Transport Network.

An aspect of the disclosure relates to a method for converting a server signal to an optical transport signal to be transmitted over an Optical Transport Network. Typically, the server signal may be transmitted via a group of bounded PHYs (i.e. physical layer), for example, a FlexE group. The server signal may comprise an optical server signal if the bounded PHYs are optical channels, for example, 100GBASE-R PHYs. In particular, the server signal may carry one or more client signals which may be further directed towards different destination nodes. The one or more client signals may be, for example, FlexE clients. Also, the optical transport signal may have a frame structure referred to as Optical Transport Units (OTU). Typically, each Optical Transport Unit comprises at least one Optical Data Unit (ODU). Moreover, the Optical Data Units comprise frame structures. According to embodiments, the frame structures of the ODUs may have fixed sizes (ODUk) and/or variable sizes (ODUflex).

According to the disclosure, the method may comprise receiving or obtaining the server signal at an edge network node of the Optical Transport Network. The method may comprise demapping the one or more client signals from the server signal. In particular, each of the client signals may comprise a time-division-multiplex (TDM) signal with a corresponding transmission rate (e.g. a FlexE TDM client signal). In embodiments, the one or more client signals may have the same or different transmission rates.

The method may further comprise extracting a server signal clock from the server signal. The method may also comprise generating one or more client signal clocks for the one or more client signals. In case the client signal is a FlexE TDM client signal, the client signal clock is also called FlexE TDM client signal clock. According to the disclosure, the generation of the one or more (FlexE TDM) client signal clocks for the one or more client signals may be based on the extracted server signal clock. In an embodiment, the one or more FlexE TDM client signal clocks may be generated by dividing the server signal clock by a number of sub-channels in the client signals. Thus, each of the client signal clocks may be associated with one of the client signals.

According to the disclosure, the method may also comprise mapping synchronously the one or more (FlexE TDM) client signals to the Optical Data Units of the optical transport signal. In detail, the one or more FlexE TDM client signals may be mapped to the Optical Data Units of the optical transport signal using the one or more FlexE TDM client signal clocks. Moreover, the one or more client signals may be mapped to the Optical Data Units by a Bit-synchronous Mapping Procedure (BMP) as defined in ITU-T G.709 for performing mapping of a constant bit rate (CBR) signal into an optical payload unit (OPUk), so as to decrease artificial increment in the client signal rate. Subsequently, the method may further comprise transmitting the optical transport signal on the Optical Transport Network. It is beneficial to apply the BMP mapping to the extracted FlexE TDM client signals to avoid a full FlexE server termination in a transport network element as well as to reduce inefficient processing of a complex mapping procedure such as IMP mapping of the FlexE client into the ODUflex/ODUk which involves another idle insertion/deletion procedure according to ITU-T G.709.

Configured as above, only the FlexE TDM client signals are taken out for signal conversion and the FlexE TDM client signals are converted into ODUk/ODUflex containers through a simple mapping procedure, i.e. the BMP mapping of the FlexE TDM client into the ODUflex/ODUk. In other words, by extracting a TDM sub-channel which carries a client (e.g. a FlexE client), a simple mapping procedure such as BMP can be applied to convert a client signal into an optical transport signal (e.g. ODUk/ODUflex containers) efficiently, thereby reducing processing complexity and transmission delay without applying a new complicated mapping procedure.

Another aspect of the disclosure relates to a network device for converting a server signal to an optical transport signal to be transmitted over an Optical Transport Network. The network device may be located in a network node at an edge of the Optical Transport Network, for example, in a terminating network node such as FlexE terminating transport network equipment. In particular, the server signal may carry one or more client signals. Also, the optical transport signal may have a frame structure referred to as Optical Transport Units (OTU). Typically, each Optical Transport Unit comprises at least one Optical Data Unit (ODU). Moreover, the Optical Data Units comprise frame structures. According to embodiments, the frame structures of the ODUs may have fixed sizes (ODUk) and/or variable sizes (ODUflex).

According to the disclosure, the device may comprise a server signal terminating unit. The server signal terminating unit may be configured to receive the server signal. Further, the server signal terminating unit may be configured to demap the one or more (FlexE TDM) client signals from the server signal. In particular, each of the client signals may comprise a time-division-multiplex (TDM) signal with a corresponding transmission rate. In embodiments, the one or more client signals may have the same or different transmission rates. According to the disclosure, the server signal terminating unit may also be configured to extract a server signal clock from the server signal.

The device may further comprise a clock generating unit. The clock generating unit may be configured to generate one or more FlexE TDM client signal clocks for the one or more client signals. According to the disclosure, the generating unit may generate the FlexE TDM client signal clock(s) based on the server signal clock. In an embodiment, to generate the client signal clock(s), the clock generating unit may comprise a clock divider. In detail, the divider may be configured to divide the server signal clock by a number corresponding to the number of sub-channels utilized by the client signals within the server signal. Accordingly, each of the client signal clocks may be associated with one of the client signals.

According to the disclosure, the device may also comprise a mapper. The mapper may be configured to synchronously map the one or more client signals to the Optical Data Units of the optical transport signal. In detail, the one or more client signals may be mapped to the Optical Data Units of the optical transport signal using the one or more client signal clocks. As indicated above, to map the one or more client signals to the Optical Data Units, the mapper may apply a Bit-synchronous Mapping Procedure (BMP) as defined in ITU-T G.709 for performing mapping of a constant bit rate (CBR) signal into an optical payload unit (OPUk), so as to decrease artificial increment in client signal rate. Also, the device may comprise an optical transmitter. The optical transmitter may be configured to transmit the optical transport signal on the Optical Transport Network. Advantageously, applying the BMP mapping to the extracted TDM client signals can avoid a full FlexE server termination in a transport network element, and inefficient processing of a complex mapping procedure such as IMP mapping can be further reduced according to the disclosure.

Configured as above, by means of a server signal terminating unit which extracts a TDM sub-channel carrying a client (e.g. a FlexE client), a client signal can be efficiently converted into an optical transport signal (e.g. ODUk/ODUflex containers) for OTN transmission through a mapper implementing a simple mapping procedure such as BMP, thereby reducing processing complexity and transmission delay without applying a new complicated mapping procedure.

Another aspect of the disclosure relates to a method for converting an optical transport signal transmitted over an Optical Transport Network to a client signal. In particular, the client signal may comprise a time-division-multiplex (TDM) signal with a corresponding transmission rate. For example, the client signal may be a FlexE TDM client signal. Also, the optical transport signal may have a frame structure referred to as Optical Transport Units (OTU). Typically, each Optical Transport Unit may comprise at least one Optical Data Unit (ODU). Moreover, the Optical Data Units comprise frame structures. According to embodiments, the frame structures of the ODUs may have fixed sizes (ODUk) and/or variable sizes (ODUflex).

According to the disclosure, the method may comprise receiving the transport signal at an edge network node of the Optical Transport Network. The method may comprise demapping synchronously the client signal from the optical transport signal. In embodiments, the client signal may be demapped from the optical transport signal by a Bit-synchronous Mapping Procedure (BMP) as defined in ITU-T G.709 for performing demapping of a constant bit rate (CBR) signal out of an optical payload unit (OPUk), so as to decrease artificial increment in client signal rate. The method may also comprise extracting an Optical Data Unit clock from the optical transport signal. As such, the FlexE TDM client signal regenerated after the demapping can have the correct signal structure and rate as expected on a native Ethernet port and can be transmitted as such, thereby saving additional processing circuitry.

Furthermore, the method may comprise generating a FlexE TDM client signal clock for the client signal based on the Optical Data Unit clock. In an embodiment, the generating the FlexE TDM client signal clock based on the Optical Data Unit clock may comprise phase-locking the Optical Data Unit clock. As such, the generated client signal clock can be adapted to the Optical Data Unit clock and a jitter-free clock obtained. According to the disclosure, the method may also comprise transmitting the client signal and the client signal clock to a server node.

According to embodiments, the method may further comprise buffering the client signal before transmitting the client signal to the server node. The method may further comprise generating a server signal. Typically, the server signal may be transmitted via a group of bounded PHYs (i.e. physical layer), for example, a FlexE group. The server signal may be an optical server signal if the bounded PHYs are optical channels, for example, 100GBASE-R PHYs. In detail, the generating the server signal may comprise converting the client signal into the server signal based on the generated client signal clock and a server clock using a FlexE Server generation function according to "IA # OIF-FLEXE-01.0 Flex Ethernet Implementation Agreement". Subsequently, the method may comprise transmitting the server signal to the server node.

Configured as above, the FlexE TDM client embedded in the ODUflex or ODUk is demapped as any other TDM or CBR mapped signal through removal of the fixed stuff bits, regeneration of the original signal via a buffer and jitter clean-up PLL. Advantageously, a simple demapping procedure such as BMP is applied to efficiently convert an optical transport signal (e.g. ODUk/ODUflex containers) into a client signal. By phase-locking the optical transport signal clock (i.e. the ODU clock), jitter in the client signal clock can be removed and the client signal can be easily converted back to the server signal without requiring high processing complexity and/or increased transmission delay.

Another aspect of the disclosure relates to a network device for converting an optical transport signal transmitted over an Optical Transport Network to a client signal. The network device may be located in a network node at an edge of the Optical Transport Network, for example, in a terminating network node such as FlexE terminating transport network equipment. In particular, the client signal may comprise a time-division-multiplex (TDM) signal with a corresponding transmission rate. For example, the client signal may be FlexE TDM client signal. Also, the optical transport signal has a frame structure referred to as Optical Transport Units (OTU). Typically, each Optical Transport Unit comprises at least one Optical Data Unit (ODU). Moreover, the Optical Data Units may comprise frame structures. According to embodiments, the frame structures of the ODUs may have fixed sizes (ODUk) and/or variable sizes (ODUflex).

According to the disclosure, the device may comprise a demapper. The demapper may be configured to receive the transport signal. The demapper may also be configured to demap synchronously the client signal from the optical transport signal. In an embodiment, the demapper may comprise a Bit-synchronous Mapping Procedure (BMP) as defined in ITU-T G.709 for performing mapping of a constant bit rate (CBR) signal into an optical payload unit (OPUk), so as to decrease artificial increment in client signal rate. The demapper may also be configured to extract an Optical Data Unit clock from the optical transport signal. Thus, the generated FlexE TDM client can have the correct signal structure and rate as expected on the native Ethernet port and can be forwarded as such, thereby saving additional processing circuitry.

Furthermore, the device may comprise a clock adapting unit. The clock adapting unit may be configured to generate a client signal clock for the client signal based on the Optical Data Unit clock. In an embodiment, the clock adapting unit may comprise a phase-locked loop (PLL). The PLL may be configured to adapt the client signal clock to the Optical Data Unit clock. As such, the adapted client signal clock may comprise a jitter-free clock. According to the disclosure, the device may further comprise a transmitter. The transmitter may be configured to transmit the client signal and the client signal clock to a server node.

According to embodiments, the device may further comprise a buffer unit. The buffer unit may be configured to buffer the client signal before transmitting the client signal to the server node. Moreover, the device may comprise a server signal generating unit. The server signal generating unit may be configured to generate a server signal. In detail, the server signal generating unit may convert the client signal to the server signal based on the generated client signal clock and a server clock using a FlexE Server generation function according to "IA # OIF-FLEXE-01.0 Flex Ethernet Implementation Agreement". Subsequently, the transmitter may be configured to transmit the server signal to the server node.

Configured as above, by means of a demapper which implements a simple demapping procedure such as BMP, an optical transport signal (e.g. ODUk/ODUflex containers) can be converted into a client signal efficiently. The use of a PLL further provides a jitter-free clock for the client signal which is adapted to the optical transport signal clock (i.e. the ODU clock), thereby enabling efficient conversion of the client signal to the server signal without high processing complexity and/or increased transmission delay required.

It will be appreciated that method steps and device features may be interchanged in many ways. In particular, the details of the disclosed device can be implemented as a method and vice versa, as the skilled person will appreciate.

### Brief Description of the Figures

Embodiments of the disclosure are explained below in an exemplary manner with reference to the accompanying drawings, wherein
**Fig. 1** schematically illustrates an application example of FlexE terminating transport network;
**Fig. 2(a)** schematically illustrates an example of a FlexE TDM client mapping procedure according to embodiments of the disclosure;
**Fig. 2(b)** schematically illustrates an example frame structure of a OPUk frame according to ITU-T G.709, Chapter 17;
**Fig. 3** illustrates processing steps for a proposed signal converting method using a FlexE TDM client mapping procedure according to embodiments of the disclosure;
**Fig. 4** schematically illustrates an example of a FlexE TDM client demapping procedure according to embodiments of the disclosure;
**Fig. 5** schematically illustrates an example of a FlexE TDM client demapping procedure according to embodiments of the disclosure;
**Fig. 6** illustrates processing steps for a proposed signal converting method using a FlexE TDM client demapping procedure according to embodiments of the disclosure.

### Detailed Description

A basic idea in this disclosure relates to converting a server signal to an optical transport signal which is to be transmitted over an Optical Transport Network (OTN). In particular, the proposed method and devices give a specific solution for problems regarding efficient signal processing due to improved mapping/demapping procedures.

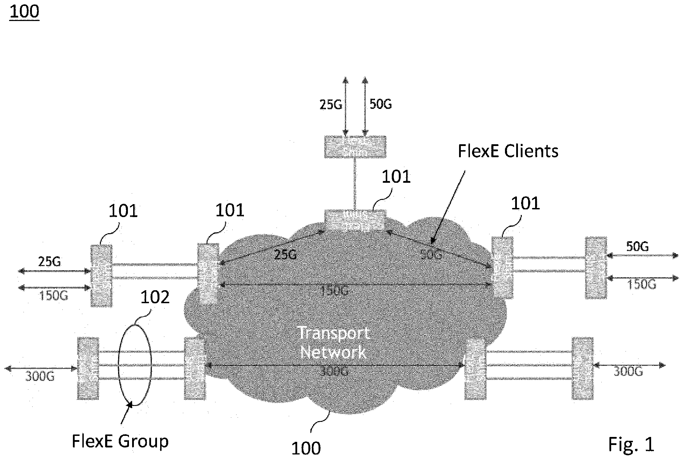

**Fig. 1** shows an application example of FlexE terminating transport network equipment comprising routers and/or switches **101** (e.g. FlexE Shim as shown in **Fig. 1**) connected to a transport network **100,** e.g. an optical transport network (OTN). According to the FlexE implementation agreement, general capabilities are supported including bounding of Ethernet PHYs, e.g. supporting a 200G MAC over two bounded 100GBASE-R PHYs, sub-rates of Ethernet PHYs, e.g. supporting a 50G MAC over a 100GBASE-R PHYs, and channelization within a PHY or a group of bounded PHYs. A group of bounded PHYs is usually referred to FlexE Group **102** comprising one or more bounded 100GBASE-R PHYs.

Typically, the FlexE Shim **101** is the layer that maps or demaps FlexE clients carried over a FlexE group **102,** and the FlexE clients may be directed towards different destination nodes. Thus, a FlexE group **102** may be regarded as FlexE Server carrying FlexE client signal(s). Besides, a FlexE client is generally based on a MAC data rate that may or may not correspond to any Ethernet PHY rate. As illustrated in **Fig. 1****,** the transport network equipment **101** (i.e. FlexE Shim) may terminate the FlexE group **102** and the total skew is comparable to the Ethernet Physical Coding Sublayer (PCS) lane skew, because the distance between any pair of FlexE Shims is limited to the Ethernet link distance, i.e. about 40km. Also, the transmission within the transport network **100** may be wavelength or subwavelength services over OTN.

It should be noted that the mapping of FlexE clients into a FlexE server may be based on time-division-multiplexing (TDM) technique and may therefore be a TDM mapping. In other words, a FlexE TDM client is the signal which is created in the router/transport network equipment **101** (e.g. a router) to generate the FlexE server by adapting the FlexE client to FlexE server sub-channels. In particular, the FlexE clients are rate-adapted to match the clock of the FlexE group/FlexE server, which is accomplished by idle insertion/deletion processes as described in detail in the document "IA # OIF-FLEXE-01.0 Flex Ethernet Implementation Agreement, March 2016" available online at www.oiforum.com/wp-content/uploads/OIF-FLEXE-01.0.pdf, which is incorporated herein by reference in its entirety. As such, a FlexE client signal is a kind of TDM signal and can be referred to FlexE TDM client/FlexE TDM client signal.

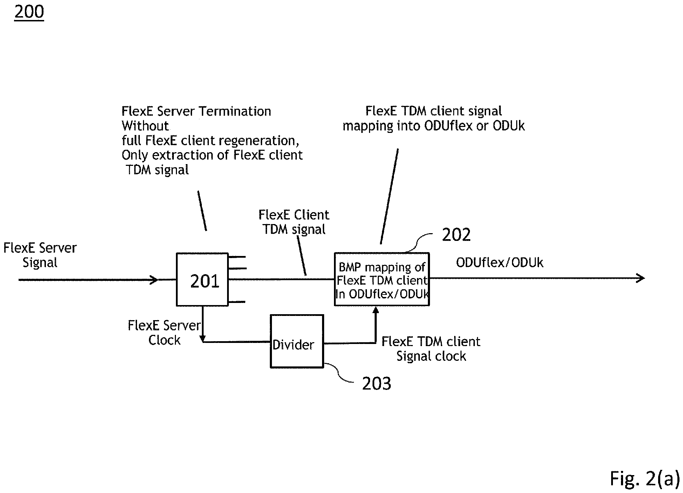

**Fig. 2(a)** schematically illustrates an example of a FlexE client mapping procedure according to embodiments of the disclosure. Such a proposed FlexE client mapping procedure is implemented in a network device **200** located at an edge network node of an optical transport network (OTN) to convert a server signal to an optical transport signal to be transmitted over the OTN. In general, the optical transport signal has a frame structure referred to as Optical Transport Units (OTU), each of which comprises at least one Optical Data Unit (ODU).

According to the disclosure, the network device **200** comprises a server signal terminating unit **201,** a mapper **202** and a clock generating unit **203.** In embodiments, the server signal terminating unit **201** receives the server signal, i.e. a FlexE server signal which may have been transmitted over Ethernet PHYs, and can be implemented in terminating transport network equipment such as FlexE Shim **101** of **Fig. 1****.** The server signal may comprise an optical server signal in case that Ethernet PHYs are e.g. 100GBASE-R PHYs. As mentioned above, the FlexE server signal may carry one or more FlexE client signals each of which comprises a TDM signal with a corresponding transmission rate by means of TDM mapping. The one or more FlexE client signals may therefore be referred to FlexE client TDM signal(s).

Moreover, the server signal terminating unit **201** demaps the one or more FlexE client signals from the FlexE server signal. Since the FlexE client signals are TDM mapped into the FlexE server signal and each of the FlexE client signals comprises a TDM signal with a corresponding transmission rate, a FlexE TDM sub-channel carrying the FlexE client can be extracted through the demapping which is accomplished by the server signal terminating unit **201.** Subsequently, the FlexE TDM sub-channel carrying the FlexE client, i.e. the extracted FlexE client TDM signal(s), is forwarded to the mapper **202.**

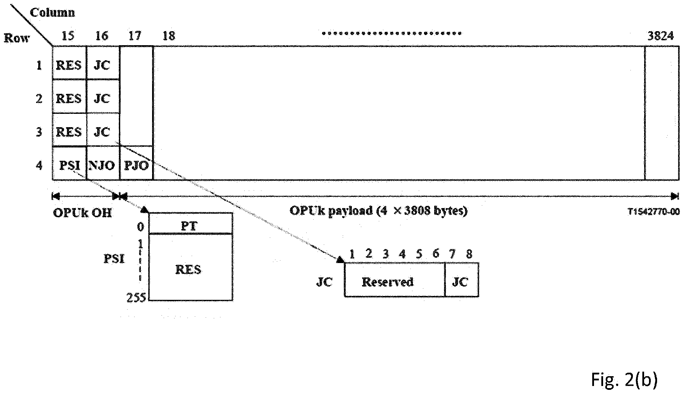

According to embodiments, the mapper **202** synchronously map the one or more extracted FlexE client TDM signals to the Optical Data Units of the optical transport signal which are to be transmitted in the OTN. Typically, the Optical Data Units comprise frame structures that have fixed sizes corresponding to ODUk and/or variable sizes corresponding to ODUflex. In detail, the mapper **202** can be implemented by a Bit-synchronous Mapping Procedure (BMP) as defined in Rec. ITU-T G.709, Chapter 17. In this specification, the BMP procedure is used to perform the mapping of a constant bit rate (CBR) signal into an optical payload unit (OPUk) based on a generic OPUk frame structure as illustrated in **Fig. 2(b)****.** The overhead section of the OPUk frame comprises three justification control (JC) bytes in rows 1 to 3 of column 16, a negative justification opportunity (NJO) byte in row 4, column 16 and a positive justification opportunity (PJO) byte in row 4, column 17, said bytes providing information regarding the performed justifications. The mapping process performed by the mapper **202** generates JC, NJO and PJO bytes according to the tables 17-1 and 17-2 shown in ITU-T G.709, chapter 17. Thereby, the artificially increased client data rate is decreased by removing stuff information thereby obtaining the original client signal out of the OPUk payload section. According to this concept, the FlexE TDM client signal(s) are mapped into an ODUflex or ODUk via the BMP mapping procedure with appropriate fixed stuff filling, which is also used for other CBR signals.

It is further noted that the mapper **202** maps the one or more extracted FlexE client TDM signals to the ODUs using a client signal clock of the client signal to be mapped, which is the extracted FlexE client TDM signal(s) in this case. The clock information regarding the clock rate of the mapped signal (i.e. the extracted FlexE client TDM signal(s)) is also forwarded to the mapper **202** along with the extracted FlexE client TDM signal(s), so that the extracted FlexE client TDM signal(s) are mapped into the ODUs using the clock information comprising one or more client signal clocks (i.e. FlexE TDM client signal clock(s)). Such clock rate should be consistent with the clock rate of the ODUflex or ODUk signal. To achieve this, the server signal terminating unit **201** extracts a server signal clock (i.e. the FlexE server clock) from the FlexE server signal for generating the clock information to be applied by the mapper **202.**

In detail, the clock generating unit **203** generates the FlexE TDM client signal clock(s) for the FlexE client TDM signal(s) based on the extracted FlexE server clock. It should be noted that each of the FlexE TDM client signal clocks is associated with one of the FlexE client TDM signals. More specifically, the FlexE TDM client signal clock is generated out of the FlexE server signal clock divided by an appropriate divider (not shown) of the clock generating unit **203,** which is provided with the number of sub-channels used by the FlexE clients in the FlexE server signal. Thus, by dividing the FlexE server signal clock by the total number of sub-channels in the FlexE client TDM signals, the clock information regarding the clock rate of the extracted FlexE client TDM signal(s) can be properly provided for the mapper **202.**

It should be noted that the dividing operation is applied to each of the FlexE client TDM signals and the respective FlexE TDM client signal clocks are generated by dividing the FlexE server signal clock by the number of sub-channels of the respective FlexE client TDM signals. The number of sub-channels of the FlexE client TDM signals may be the same or different. Further, the FlexE client TDM signals may have the same or different transmission rates. Also, each of the FlexE client TDM signals is further processed by a corresponding mapper which has the same or similar function of the mapper **202.**

The network device **200** further comprises an optical transmitter (not shown). Subsequent to the mapping of the FlexE client TDM signals into ODUk/ODUflex containers which are then be encapsulated into the optical transport signal, the optical transmitter transmits the optical transport signal on the OTN.

It is appreciated that only the FlexE client TDM signals are taken out for signal conversion and the FlexE client TDM signals are converted into ODUk/ODUflex containers through a simple mapping procedure, i.e. the BMP mapping of the FlexE TDM client into the ODUflex/ODUk. Thus, a full FlexE server termination in the transport network element is not necessary and a second IMP mapping of the FlexE client into the ODUflex/ODUk which involves another idle insertion/deletion procedure as proposed by ITU-T G.709 can be avoided, thereby reducing processing complexity and transmission delay.

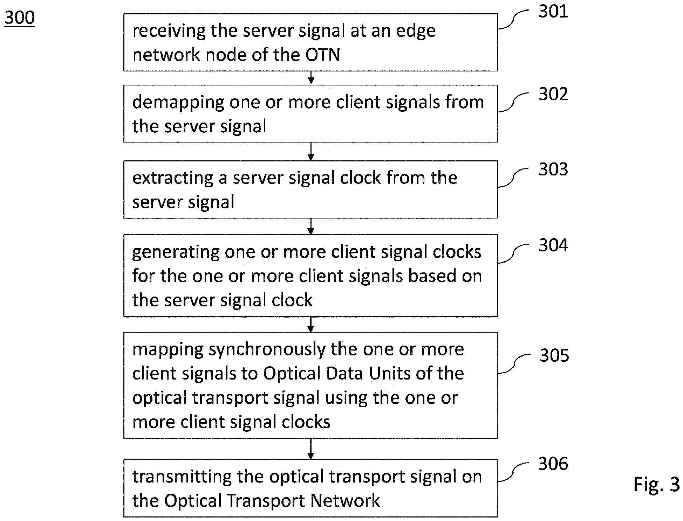

**Fig. 3** illustrates processing steps for a proposed method for converting a server signal to an optical transport signal to be transmitted over an OTN using a FlexE client mapping procedure according to embodiments of the disclosure. The method **300** can be implemented by the network device **200** as illustrated in **Fig. 2(a)****.** The method **300** comprises receiving (step **301**) the server signal at an edge network node of the OTN and demapping (step **302**) one or more client signals from the server signal. As indicated above, the one or more client signals comprise a TDM signal with a corresponding transmission rate. The method **300** also comprises extracting (step **303**) a server signal clock from the server signal. The method comprises generating (step **304**) one or more TDM client signal clocks for the one or more client signals based on the server signal clock.

According to the disclosure, each of the client signal clocks is associated with one of the client signals. The method further comprises mapping (step **305**) synchronously the one or more client signals to Optical Data Units of the optical transport signal using the one or more client signal clocks and transmitting (step **306**) the optical transport signal on the Optical Transport Network.

As indicated above, the proposed method **300** enables efficient conversion of the server signal to the optical transport signal by means of simple synchronous mapping procedure, i.e. BMP mapping of the client signals into ODUs, which avoids doing a complete FlexE server termination with full idle insertion/deletion procedure for re-creating the FlexE client in the optical transport network element and therefore reduces processing complexity and transmission delay.

It should be noted that the device features described above correspond to respective method features that are however not explicitly described, for reasons of conciseness. The disclosure of the present document is considered to extend also to such method features.

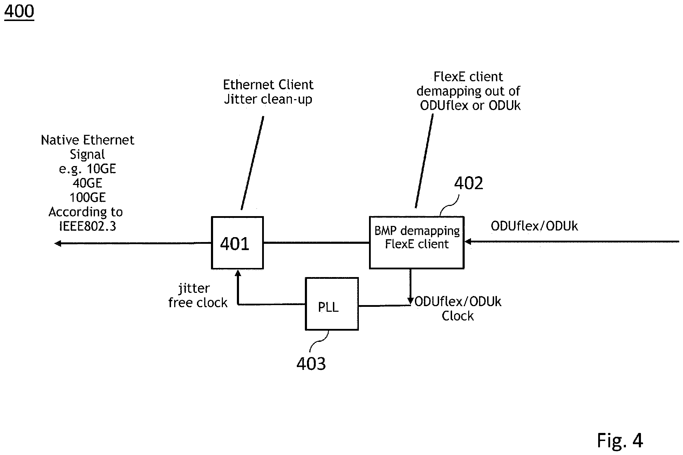

At a receiving network node/ transport network equipment an optical transport signal is converted back to a client signal. Similar concept may be applied in the reverse direction using a FlexE client demapping procedure. **Fig. 4** schematically illustrates an example of a FlexE client demapping procedure according to embodiments of the disclosure. The proposed FlexE client demapping procedure is implemented in a network device **400** located at an edge network node of an optical transport network (OTN) to convert an optical transport signal that has been transmitted over the OTN into a client signal. As mentioned above, the client signal comprises a TDM signal with a corresponding transmission rate and is regarded as FlexE client TDM signal.

According to the disclosure, the network device 400 comprises a demapper **402,** a clock adapting unit **403,** and a transmitter (not shown). In embodiments, the demapper **402** receives the optical transport signal. As indicated above, the optical transport signal has a frame structure referred to as Optical Transport Units (OTU), each of which comprises at least one Optical Data Unit (ODU). Typically, the ODUs comprise frame structures that have fixed sizes corresponding to ODUk and/or variable sizes corresponding to ODUflex. Furthermore, the demapper **402** demaps synchronously the FlexE client TDM signal from the optical transport signal. Similar to the mapping procedure as mentioned above, the demapper **402** can be implemented by the Bit-synchronous Mapping Procedure (BMP) as defined in Rec. ITU-T G.709, Chapter 17. According to the specification, the de-mapping process performed by the demapper **402** at the receiver side interprets the JC, NJO and PJO bytes according to table 17-3. Thereby, the artificially increased client data rate is decreased by removing stuff information thereby obtaining the original client signal out of the OPUk payload section.

Accordingly, the FlexE TDM client signal(s) are demapped from an ODUflex or ODUk via the BMP mapping procedure with appropriate fixed stuff filling, which is the substantially the same procedure of that for other CBR signals. In other words, the FlexE TDM client embedded in the ODUflex or ODUk is demapped as any other TDM or constant bit rate (CBR) mapped signal.

It is further noted that a client signal clock associated with the FlexE TDM client should be provided in order to recover a native Ethernet signal from the FlexE TDM client. This clock information may be determined based on a clock in the optical transport signal clock, i.e. an ODUflex/ODUk clock. To achieve this, the demapper **402** extracts an ODU clock from the optical transport signal for providing the clock information for Ethernet signal generation.

In detail, the clock adapting unit **403** generates the FlexE TDM client signal clock(s) for the FlexE client TDM signal(s) based on the Optical Data Unit clock. It should be noted that each of the FlexE TDM client signal clocks is associated with one of the FlexE client TDM signals. Since the FlexE client rate is not necessarily consistent with the ODU rate, the clock adapting unit **403** comprises a phase-locked loop (PLL) element to generate the FlexE TDM client signal clock out of the ODU clock by adapting the FlexE TDM client signal clock to the ODU clock. Thus, the adapted FlexE TDM client signal clock is jitter-free. The network device **400** further includes a buffer unit **401** and the jitter-free FlexE TDM client signal clock is forwarded to the buffer unit **401** together with the FlexE TDM client signal. Subsequently, the transmitter of the network device **400** transmits the FlexE TDM client signal and the FlexE TDM client signal clock to a server node (not shown). By this way, the FlexE client can be efficiently demapped and transported via a native Ethernet port, e.g. 10GE, 40GE, 100GE etc.

It is noted that the buffer unit **401** buffers the FlexE TDM client signal before transmitting the FlexE TDM client signal to the server node, i.e. before mapping the client signal into a server frame. More specifically, the buffer unit **401** can be, for example, a first-in-first-out (FIFO) buffer unit which temporarily stores client signal data until the data are provided to a mapping entity for including the data in a server frame or server multiframe. In addition, the buffer unit **401** determines e.g. the number of client entities per server frame or server multiframe based on client clock information and server frame clock information, and the client signal may be in general written into the buffer unit **401** according to the client signal clock rate.

As such, the FlexE TDM client embedded in the ODUflex or ODUk is demapped as any other TDM or CBR mapped signal through removal of the fixed stuff bits, regeneration of the original signal via a buffer and jitter clean-up PLL. This regenerated FlexE TDM client has the correct signal structure and rate as expected on the native Ethernet port and can be transported as such, therefore no additional circuitry is needed.

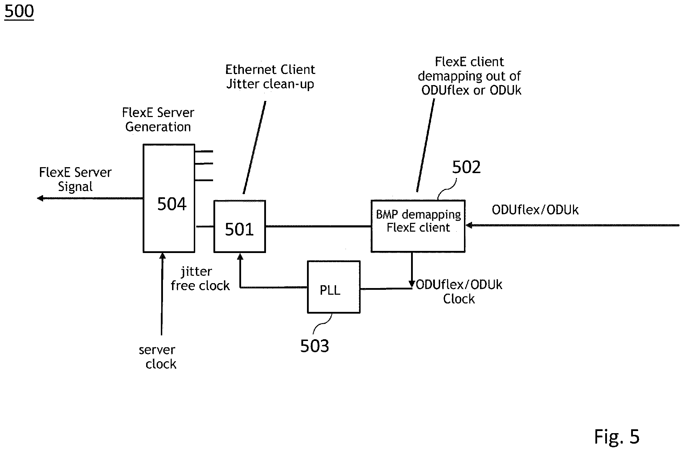

**Fig. 5** schematically illustrates an example of a FlexE client demapping procedure according to embodiments of the disclosure. The proposed FlexE client demapping procedure is implemented in a network device **500** located at an edge network node of an optical transport network (OTN) to convert an optical transport signal that has been transmitted over the OTN into a client signal. As mentioned above, the client signal comprises a TDM signal with a corresponding transmission rate and is regarded as FlexE client TDM signal.

According to the disclosure, the network device **500** comprises a demapper **502,** a clock adapting unit **503,** and a server signal generating unit **504.** In embodiments, the demapper **502** receives the optical transport signal. As indicated above, the optical transport signal has a frame structure referred to as Optical Transport Units (OTU), each of which comprises at least one Optical Data Unit (ODU). Typically, the ODUs comprise frame structures that have fixed sizes corresponding to ODUk and/or variable sizes corresponding to ODUflex. Furthermore, the demapper **502** demaps synchronously the FlexE client TDM signal from the optical transport signal. Similar to the demapping procedure as illustrated in **Fig. 4****,** the demapper **502** can be implemented by the Bit-synchronous Mapping Procedure (BMP) as defined in Rec. ITU-T G.709, Chapter 17. According to the specification, the de-mapping process performed by the demapper **502** at the receiver side interprets the JC, NJO and PJO bytes according to table 17-3. Thereby, the artificially increased client data rate is decreased by removing stuff information thereby obtaining the original client signal out of the OPUk payload section.

Accordingly, the FlexE TDM client signal(s) are demapped from an ODUflex or ODUk via the BMP mapping procedure with appropriate fixed stuff filling, which is the substantially the same procedure of that for other CBR signals. In other words, the FlexE TDM client embedded in the ODUflex or ODUk is demapped as any other TDM or constant bit rate (CBR) mapped signal.

It is further noted that a client signal clock associated with the FlexE TDM client should be provided in order to recover a native Ethernet signal from the FlexE TDM client. This clock information may be determined based on a clock in the optical transport signal clock, i.e. an ODUflex/ODUk clock. To achieve this, the demapper **502** extracts an ODU clock from the optical transport signal for providing the clock information for Ethernet signal generation.

In detail, the clock adapting unit **503** generates the FlexE TDM client signal clock(s) for the FlexE client TDM signal(s) based on the Optical Data Unit clock. It should be noted that each of the FlexE TDM client signal clocks is associated with one of the FlexE client TDM signals. Since the FlexE client rate is not necessarily consistent with the ODU rate, the clock adapting unit **503** comprises a phase-locked loop (PLL) element to generate the FlexE TDM client signal clock out of the ODU clock by adapting the FlexE TDM client signal clock to the ODU clock. Thus, the adapted FlexE TDM client signal clock is jitter-free. The network device **500** further includes a buffer unit **501** and the jitter-free FlexE TDM client signal clock is forwarded to the buffer unit **501** together with the FlexE TDM client signal. Subsequently, the FlexE TDM client signal may be transmitted, e.g. by a transmitter of the network device **500** along with the FlexE TDM client signal clock to a server node. By this way, the FlexE client can be efficiently demapped and transported via a native Ethernet port, e.g. 10GE, 40GE, 100GE etc.

It is noted that the buffer unit **501** buffers the FlexE TDM client signal before transmitting the FlexE TDM client signal to the server generation unit, i.e. before mapping the client signal into a server frame. More specifically, the buffer unit **501** can be, for example, a first-in-first-out (FIFO) buffer unit which temporarily stores client signal data until the data are provided to a mapping entity for including the data in a server frame or server multiframe. In addition, the buffer unit **501** determines e.g. the number of client entities per server frame or server multiframe based on client clock information and server frame clock information, and the client signal may be in general written into the buffer unit **501** according to the client signal clock rate.

Alternatively, a plurality of FlexE TDM client signals may be demapped from respective ODUflexs or ODUks via corresponding demappers which have the same or similar function of the demapper **502,** i.e. via the BMP mapping procedure. It should be noted that a respective FlexE TDM client signal clock for each of the FlexE client TDM signals is generated by a clock adapting unit which has the same or similar function of the clock adapting unit **503** that adapts the FlexE TDM client signal clock to the respective ODU clock through a phase-locked loop (PLL) element. Also, each of the FlexE TDM client signals are forwarded together with the respective adapted FlexE TDM client signal clocks to a buffer unit which is the same or similar to the buffer unit **501.**

Subsequently, the FlexE TDM client signals are forwarded to the server signal generating unit **504** to generate a server signal, e.g. a FlexE server signal as mentioned above, using a FlexE Server generation function as described in detail in the document "IA # OIF-FLEXE-01.0 Flex Ethernet Implementation Agreement, March 2016" available online at www.oiforum.com/wp-content/uploads/OIF-FLEXE-01.0.pdf, which is incorporated herein by reference in its entirety. By this way, the server signal generating unit **504** converts the FlexE TDM client signal to the server signal based on the generated client signal clock and a server clock. In other words, the FlexE client can be re-assembled into a new FlexE server signal using the server signal generating unit **504.** The device **500** may thus be regarded as a counterpart of the device **200.**

It is further noted that the device **400** may be a simplified modification of the device **500.** It is therefore appreciated that the same processing steps as in the device **400** may be applied to each FlexE client signal in the device **500.** Although a FlexE Server generation function is applied, no IMP demapping (idle deletion/insertion) is required in this case. Therefore, only one 64B/66B idle insertion/deletion process is needed within the FlexE server generation engine, thereby reducing processing complexity and transmission delay.

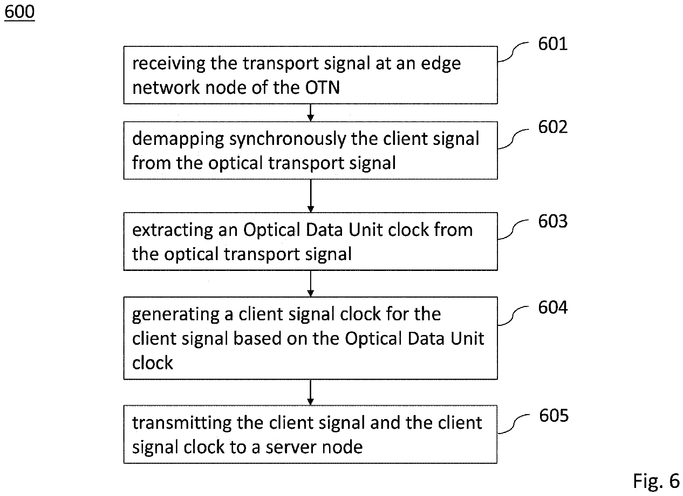

**Fig. 6** illustrates processing steps for a proposed method for converting an optical transport signal transmitted over an OTN to a client signal using a FlexE client demapping procedure according to embodiments of the disclosure. The method **600** can be implemented by the network devices **400, 500 as** illustrated in **Fig. 4** and **Fig. 5****.** The method **600** comprises receiving (step **601**) the transport signal at an edge network node of the OTN and demapping (step **602**) synchronously the client signal from the optical transport signal. As indicated above, the client signal comprises a TDM signal with a corresponding transmission rate. The method **600** also comprises extracting (step **603**) an Optical Data Unit clock from the optical transport signal. The method comprises generating (step **604**) a client signal clock for the client signal based on the Optical Data Unit clock. The method further comprises transmitting (step **605**) the client signal and the client signal clock to a server node.

It should be noted that the device features described above correspond to respective method features that are however not explicitly described, for reasons of conciseness. The disclosure of the present document is considered to extend also to such method features.

As indicated above, the proposed method **600** and the corresponding devices **400, 500** enable efficient conversion of the optical transport signal to the server signal to by means of simple synchronous demapping procedure, i.e. BMP demapping of ODUs into the client signals, which saves 64B/66B idle insertion/deletion process needed within the FlexE server generation engine and therefore reduces processing complexity and transmission delay. Moreover, the demapped FlexE client can be directly played out to a native Ethernet port, which achieves relatively low processing complexity similar to that for CBR signals.

It should be further noted that the description and drawings merely illustrate the principles of the proposed device. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

## Claims

1. Method for converting a server signal to an optical transport signal to be transmitted over an Optical Transport Network, the server signal carrying one or more client signals and the optical transport signal having a frame structure referred to as Optical Transport Units, each Optical Transport Unit comprising at least one Optical Data Unit, the method comprising:
demapping, from the server signal, the one or more client signals, wherein each of the client signals comprises a time-division-multiplex (TDM) signal with a corresponding transmission rate;
extracting a server signal clock from the server signal;
generating, based on the server signal clock, one or more client signal clocks for the one or more client signals, each of the client signal clocks associated with one of the client signals; and
mapping synchronously the one or more client signals to the Optical Data Units of the optical transport signal using the one or more client signal clocks.

2. The method of claim 1, wherein the one or more client signals are mapped to the Optical Data Units by a Bit-synchronous Mapping Procedure (BMP).

3. The method of claim 1 or 2, wherein the one or more client signal clocks are generated by dividing the server signal clock by a number of sub-channels utilized by the client signals within the server signal.

4. The method of any previous claim, wherein the client signals are FlexE TDM client signals.

5. A network device for converting a server signal to an optical transport signal to be transmitted over an Optical Transport Network, the server signal carrying one or more client signals and the optical transport signal having a frame structure referred to as Optical Transport Units, each Optical Transport Unit comprising at least one Optical Data Unit, the device comprising:
a signal terminating unit configured to:
receive the server signal;
demap, from the server signal, the one or more client signals, wherein each of the client signals comprises a time-division-multiplex (TDM) signal with a corresponding transmission rate; and
extract a server signal clock from the server signal;
a clock generating unit configured to generate, based on the server signal clock, one or more client signal clocks for the one or more client signals, each of the client signal clocks associated with one of the client signals;
a mapper configured to synchronously map the one or more client signals to the Optical Data Units of the optical transport signal using the one or more client signal clocks; and
an optical transmitter configured to transmit the optical transport signal on the Optical Transport Network.

6. The device of claim 5, wherein the client signals are FlexE TDM client signals and the client signal clocks are FlexE TDM client signal clocks.

7. The device of claim 5 or 6, wherein the clock generating unit comprises a divider configured to divide the server signal clock by a number of sub-channels of the client signals.

8. Method for converting an optical transport signal transmitted over an Optical Transport Network to a client signal comprising a time-division-multiplex (TDM) signal with a corresponding transmission rate, the optical transport signal having a frame structure referred to as Optical Transport Units, each Optical Transport Unit comprising at least one Optical Data Unit, the method comprising:
demapping synchronously, from the optical transport signal, the client signal;
extracting an Optical Data Unit clock from the optical transport signal; and
generating, based on the Optical Data Unit clock, a client signal clock for the client signal.

9. The method of claim 8, wherein the generating the client signal clock based on the Optical Data Unit clock comprises phase-locking the Optical Data Unit clock.

10. The method of claim 8 or 9, further comprising buffering the client signal before transmitting the client signal to the server node.

11. The method of any of the claims 8 - 10, further comprising generating a server signal and transmitting the server signal to the server node.

12. The method of claim 11, wherein the generating the server signal comprises converting the client signal based on the generated client signal clock and a server clock.

13. A network device for converting an optical transport signal transmitted over an Optical Transport Network to a client signal comprising a time-division-multiplex (TDM) signal with a corresponding transmission rate, the optical transport signal having a frame structure referred to as Optical Transport Units, each Optical Transport Unit comprising at least one Optical Data Unit, the device comprising:
a demapper, configured to:
demap synchronously, from the received optical transport signal, the client signal; and
extract an Optical Data Unit clock from the optical transport signal;
a clock adapting unit configured to generate, based on the Optical Data Unit clock, a client signal clock for the client signal; and
a transmitter configured to transmit the client signal and the client signal clock to a server node.

14. The device of claim 13, wherein the clock adapting unit comprises a phase-locked loop (PLL) configured to adapt the client signal clock to the Optical Data Unit clock.

15. The device of claim 13 or 14, further comprising a buffer unit configured to buffer the client signal before transmitting the client signal to the server node.
